# EUROPEAN PATENT SPECIFICATION

(11) **EP 2 048 963 B1**
(45) Date of publication and mention of the grant of the patent: **06.10.2010**
(21) Application number: 07785773.8
(22) Date of filing: 09.08.2007
(51) Int. Cl.: A23C 9/142, A23C 19/028, A23C 19/16

(54) **A METHOD OF PRODUCING CHEESE IN A CONTAINER**
VERFAHREN ZUR HERSTELLUNG VON KÄSE IN EINEM BEHÄLTER
PROCÉDÉ DE PRODUCTION DE FROMAGE DANS UN RÉCIPIENT

(30) Priority: 10.08.2006 DK 200601048
(43) Date of publication of application: 22.04.2009
(73) Proprietor: Primoreels A/S, 4390 Vipperød (DK)
(72) Inventor: HENRIKSEN, Jørgen, 2920 Charlottenlund (DK)
(74) Representative: Plougmann & Vingtoft A/S
(86) International application number: PCT/DK2007/050105
(87) International publication number: WO 2008/017309

(56) References cited:
- WO-A-01/32028
- US-A- 4 205 090

## Description

### FIELD OF THE INVENTION

The present invention relates to a method for producing cheese. The method of the invention is particularly suited for use in the production of cheeses produced from milk by ultra filtration or by recombination in which production the cheese is contained in a brine produced as a result of mixing liquid separated from the concentrate or mix with e.g. salt.

### BACKGROUND OF THE INVENTION

WO 01/32028 discloses a method of producing acidified cheese in a container wherein a concentrate is filled into a container and US-A-4 205 090 discloses preparation of cheese by ultra filtration of a milk product.

Cheeses produced from milk by use of ultra filtration or recombination are becoming very popular. The types of cheeses produced by this method can be divided into two main groups: un-acidified cheeses and acidified cheeses.

The latter are produced by adding cheese culture and rennet to the UF (ultra filtrated) retentate or recombinated mix. The culture will start an acidification process in the retentate or mix and within approx. 24 hours, the pH of the retentate or mix will drop from approximately 6.6 to approximately 4.6.

The acidified cheeses usually contain salt, frequently approximately 3.5% of the weight. The salt can not be mixed into the retentate or mix before acidification as it would prevent the culture from developing and thus stop the acidification.

The first plants for filling UF retentate or recombined cheese in retail containers came on the market in the late 1990s. They are all working according to the following principle:
- Retentate mix containing rennet and culture are filled into the retail container;
- The mixture is left to coagulate in the container, which take approx. 20 min;
- On top of the newly coagulated cheese curd and in the container, is placed a parchment membrane and dry salt is dosed on top of the membrane, whereupon the container is sealed.

The reason for placing a membrane on top of the freshly coagulated curd is to keep the salt separated from the cheese curd until acidification of the curd has taken place - it means until the pH value in the curd has dropped to approx. 4.6.

The parchment membranes, which so far have been used in all cheese plants will allow permeate from the freshly coagulated cheese curd to penetrate the membrane and reach the salt, creating a quantity of saturated brine, which in turn will seep down into the still not fully acidified curd below the membrane along the walls of the container and inactivate the culture there. This method results in cheeses with different pH values in the centre and in the periphery of the cheese.

In order to overcome this problem many factories are turning the containers upside down after sealing. The cheese curd will then during the acidification process be hanging above the membranes effectively separated from the salt until acidification has taken place and the syneresis will release some permeate. The cheese will drop down on the membrane when the syneresis sets in. By this method, the permeate will dissolve the dry salt but in order that the brine created should be able to salt the cheese it is necessary to turn the containers back again. This process of turning the containers twice is time and space consuming and undesirable in a modern processing line.

Hence, a more efficient method for making cheese would be advantageous. Moreover, it would be advantageous if the cheese produced would be of homogeneous quality.

### OBJECT OF THE INVENTION

It is an object of the present invention to provide an alternative to the prior art.

In particular, it may be seen as an object of the present invention to provide a method of producing cheese that requires fewer working steps than the methods of the prior art. Moreover, it may be seen as an object of the present invention to provide a method of producing cheese with a homogeneous quality.

### SUMMARY OF THE INVENTION

Thus, the above described object and several other objects are intended to be obtained in a first aspect of the invention by providing a method of producing cheese in a container, which method comprising the steps of:
- filling a coagulatable liquid substance into an open ended container, which container comprises a base section and a wall section connected to or made integral with the base section;
- leaving the coagulatable liquid substance to coagulate;
- arranging a membrane on top of the coagulated liquid substance;
- dosing a solid substance on top of the membrane;
   and
- liquid sealing the open ended container by a lid,
**characterized in that** the membrane is an impermeable membrane.

According to this invention an impermeable membrane (such as a PP membrane or the like) is used. By use of such a membrane the solid substance dosed on the membrane is prevented from drawing liquid, such as permeate, from the coagulated liquid substance through the membrane. The amount of liquid substance filled into the open ended container should be so that a free space above the coagulatable liquid substance is left, i.e. that the container is not filled to the top of the wall thereof.

According to aspects of the invention the coagulatable liquid substance comprises ingredients for producing White cheese such as FETA cheese, and the coagulatable liquid substance may comprise retentate or mix containing rennet and cheese culture. Moreover, the solid substance may be a salt, preferably NaCl.

By using an impermeable membrane for producing white cheese, the salt dosed on the membrane is prevented from drawing water from the coagulated liquid substance, viz. the coagulated cheese curd, through the membrane, which means that creation of brine will be prevented on top of the membrane until syneresis takes place - i.e. until the curd is acidified. The use of this type of membrane has the potential to create cheeses with the same pH in all sections, and it eliminates the need for turning the cheeses after manufacture. Thus, the container may be sealed and left stationary, until the rennet and the cheese culture of the retentate or mix acidify. By applying the impermeable membrane on top of the coagulated curd, the dry salt dosed on top of the impermeable membrane, will remain on top of the impermeable membrane until the pH in all the coagulated curd has dropped to approximately 4.6 and syneresis sets in. This syneresis will release some permeate which will rise to the top of the membrane and mix with the salt on top of the impermeable membrane. The brine thus created will seep down under the membrane to the cheese curd. By using this type of membrane no turning of the container will be required to ensure a uniform mixture of the brine and the cheese curd. Moreover, the pH value of the cheese curd will substantially be uniform throughout the cheese.

According to an aspect of the invention, the impermeable membrane is shaped so as to fit snugly with the inner side of the wall section in a horizontal plane of the open ended container. Alternative, the extension of the impermeable membrane is smaller than the inner extension of a horizontal cross section of the wall section of the container, the extension of the wall section being measured at a distance h from the base section. Thus, there is a gap between the membrane and the wall section of the container. This facilitates that the liquid created by the acidification process may rise up above the membrane to dissolve the salt placed on top of the membrane. It moreover facilitates the brine thus created to seep back into the cheese curd by osmosis.

According to an aspect of the invention, the impermeable membrane is arranged to at least partly rest on the surface of the coagulated liquid substance inside the container.

According to another aspect of the invention, the impermeable membrane is made of a plastics material. Such plastics material could be PP (polypropylene), PS (polystyrene), HDPE (High-density polyethylene), LDPE (Low-density polyethylene), PET (polyethylene terephthalate) or the like.

Further aspects and embodiments of the present invention will be set forward in the following.

It should be noted that throughout this document, the term "impermeable" as used in this document is meant to denote "impermeable to liquid".

### BRIEF DESCRIPTION OF THE FIGURES

The method according to the invention will now be described in more detail with regard to the accompanying figures. The figures show one way of implementing the present invention and are not to be construed as limiting to other possible embodiments falling within the scope of the attached claim set.
Figures 1a to 1g disclose steps of a prior art method, wherein a container is turned twice;
Figures 2a to 2d show an alternative prior art method;
Figures 3a and 3b show a method of the invention; and
Figure 4 is a flow-chart of a method according to the invention.

### DETAILED DESCRIPTION OF AN EMBODIMENT

The invention will be described in more details in the following by way of examples and the with reference to the schematic drawing. Throughout the figures, like reference numerals denote like elements.

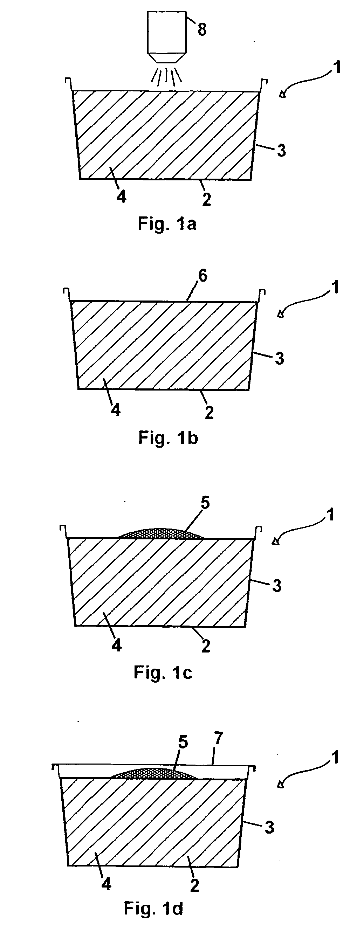

Figures 1a to 1g disclose steps of a prior art method, wherein a container is turned twice. Fig. 1a shows schematically a cross sectional view of a container assembly 1. The container assembly 1 has a base section 2 and a wall section 3 made integral with base section 2, e.g. the base section 2 and wall section 3 is moulded in one piece and form an open ended container. In Fig. 1a, the container assembly 1 is filled with retentate or mix 4 from a dispensing unit 8. The retentate or mix 4 is filled into the open ended container in an amount leaving free space above the retentate or mix amount in Fig. 1a.

The retentate or mix is e.g. ultra filtrated (UF) retentate or recombined mix with mixed-in cheese culture and rennet. The retentate or mix is left for some time, typically about 20 minutes, whereafter the retentate or mix is coagulated.

In Fig. 1b, a membrane 6, typically of parchment, has been placed upon the coagulated retentate or mix. In Fig. 1c, dry salt 5 has been dosed on top of the membran 6. Typically, the dry salt comprises NaCl.

In Fig. 1d, a lid 7 has been sealed on top of the container 1.

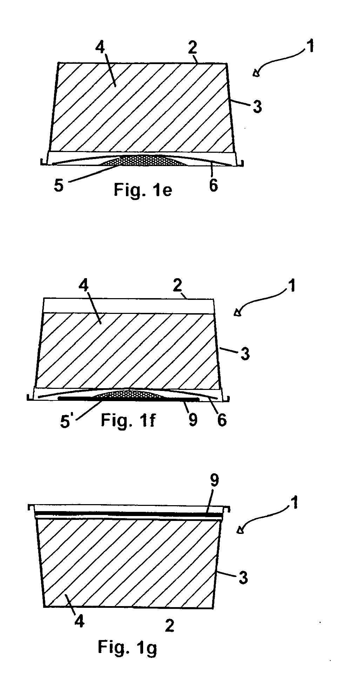

In Fig. 1e, the container has been reversed or turned upside down in order to prevent the salt from extracting liquid from the retentate or mix through the parchment. It can be seen from Fig. 1e that the membrane 6 does not touch the surface of the retentate or mix in this turned round or reversed position of the container, which hinders the salt from extracting liquid or water from the retentate or mix.

When syneresis sets in at the end of the acidification to a pH at about 4.6, the cheese will drop due to seeping of permeate from the curd. This is shown in Fig. 1f. Permeate will dissolve the salt 5 and create a brine 9.

In order to make the brine salt the cheese, the container is turned again, to an upright position shown in Fig. 1g.

The method illustrated in figs. 1a to 1g has the disadvantage of requiring the working steps of turning the container twice. Moreover, this turning of the container may require extra work space.

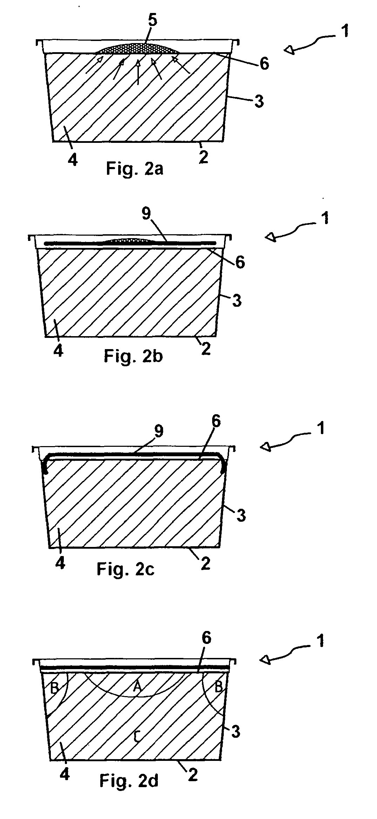

Figures 2a to 2d show an alternative prior art method. Fig. 2a has been preceded by steps corresponding to Figs. 1a to 1c, so that Fig. 2a corresponds to Fig. 1d. In Fig. 2a, however, the container 1 has not been reversed or turned upside down subsequent to dosing salt 5 on top of the membrane 6. Therefore, the salt 5 will draw water or permeate from the cheese curd 4 below the membrane, due to the parchment membrane 6 being permeable to water or liquid. In Fig. 2a, the drawing of permeate form the cheese curd is illustrated by arrows.

In Fig. 2b, the water has dissolved some of the salt 5 and has created a saturated brine 9. In Fig. 2c, the brine 9 is seeping down around the edges of the membrane 6 close to the wall section of the container 1. This is shown by the brine being shown as bending downwards into the cheese curd. The seeping of the brine 9 into the cheese curd will stop the action of the cheese culture and acidification is stopped prematurely. This results in a final product as shown in Fig. 2d, wherein the zone A comprises cheese curd with a too high solid content due to water extraction, the zones B comprise cheese curd with a too high pH value due to the cheese culture having been inactivated prematurely by the brine, and a zone C comprising cheese curd with a proper texture and pH value.

The invention is i.a. based upon the finding that in the method illustrated in Figs. 2a-2d, when a membrane is placed on a freshly coagulated curd, the salt dosed on top of the membrane will draw liquid, viz. water or permeate, out of the curd, which is below the dry salt, through the membrane. This water will dissolve some of the salt and the brine thus created will seep along the walls of the container into the cheese curd below, and the high salt concentration in that brine will prevent the proper acidification of the cheese curd along the walls of the container.

The result will be a cheese with soft layers along the container walls and a hard core. The hard core is partly due to proper acidification of the cheese and partly due to the increase in the total solid content caused by the drainage of water from the cheese curd caused by salt on top of the membrane. Such a product is not well accepted by the consumers and has a very short shelf life.

The method of the invention alleviates the above problems of the prior art.

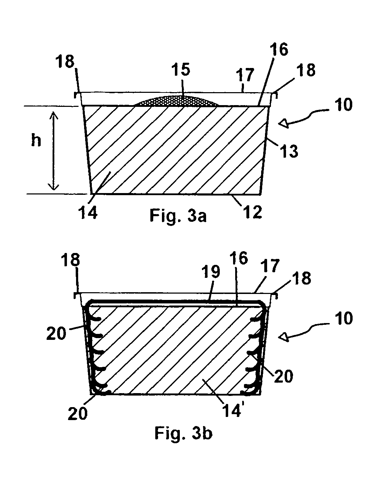

Figures 3a and 3b show a method of the invention, in that Fig. 3a and 3b schematically show a cross sectional view of a container assembly 1 in two different time instances of the method of the invention.

In Figs. 3a and 3b is seen a cross sectional view of a container 10. The container assembly 10 has a base section 12 and a wall section 13 made integral with base section 12, e.g. the base section 12 and wall section 13 is moulded in one piece and form an open ended container. The container 10 in Figs. 3a and 3b is shown containing retentate 14 and salt (NaCl) 15. The retentate 14 containing rennet and cheese culture has been filled into the open ended container in an amount leaving free space above the retentate (indicated by *h*) in Fig. 3a.

Within the container 10 and above the retentate 14 an impermeable membrane 16 is arranged. This impermeable membrane 16 is arranged on the surface of the retentate 14, typically right after the retentate 14 has coagulated. The impermeable membrane 16 is made of an impermeable material and rest on the surface of the coagulated retentate 14. On the surface of the impermeable membrane 16 salt (NaCl) 15 is dosed an due to the impermeable nature of the impermeable membrane 16 no liquid substances will be transported from the retentate 14 through the impermeable membrane 16 to the salt 15 and no brine may be created in this manner.

The impermeable membrane 16 is preferably shaped as a disc which fit snugly to the inner surface of the wall section 13 when the impermeable membrane 16 rest on the surface of the coagulated retentate. The term "fit snugly" is used to designate the situation where the outer rim of the impermeable membrane 16 abuts the inner surface of the wall section 13 without this abutment introducing wiggles in the impermeable membrane 16. Such a snug fit may prevent salt from getting in contact with the coagulated retentate or mix.

However, the impermeable membrane 16 may be shaped as a disk having a smaller size than a horizontal cross section, at height h, of the container assembly 10 whereby the impermeable membrane will not fully cover the retentate 14. The wall section 13 is typically shaped as a truncated cone (as shown in Figs. 3a and 3b) and in this case the snug fit or the smaller diameter is measured at the height h of the retentate 14 within the container assembly 10.

The impermeable membrane 16 is typically made of plastic such as PP, PS, HDPE, LDPE, PET or the like. The thickness of the membrane is typically in the order of 13-80 µm. The container used with the method of the invention is preferably capable of holding 25-1000 ml, and typically it has a height of 20-150 mm.

After dosing of salt 15 on top of the impermeable membrane, the container assembly 10 has been sealed by a lid 17 to the wall section 13, e.g. along a flange 18 provided on the upper end of the wall section 13 thereby constituting a fluid tight container assembly 10 containing the retentate 14 and salt 15. The container can alternatively be sealed by a water-tight snap on lid.

Fig. 3b shows the container at a later instance of time compared to Fig. 3a. Due to the application of an impermeable membrane, e.g. of a plastic material, on top of the coagulated curd, the dry salt 15 dosed on top of the membrane (see Fig. 3a) has remained on top of the membrane until the pH value in all the cheese curd below the membrane has dropped to approx. 4.6; this is a pH value where syneresis sets in. The set in of syneresis facilitates releasing some permeate which rises to the top of the membrane 16 and dissolves the salt 15 deposited on the membrane 16, thus creating brine 19. This brine 19 will seep down under the membrane 16 and salt the cheese. This is shown in Fig. 3b by the curved lines 20. Thus, by using this type of membrane no turning of the container 10 is required in order to obtain a correctly acidified cheese with proper salting. The solid content of the cheese 14' as well as the pH value will be the same in all the cheese 14'.

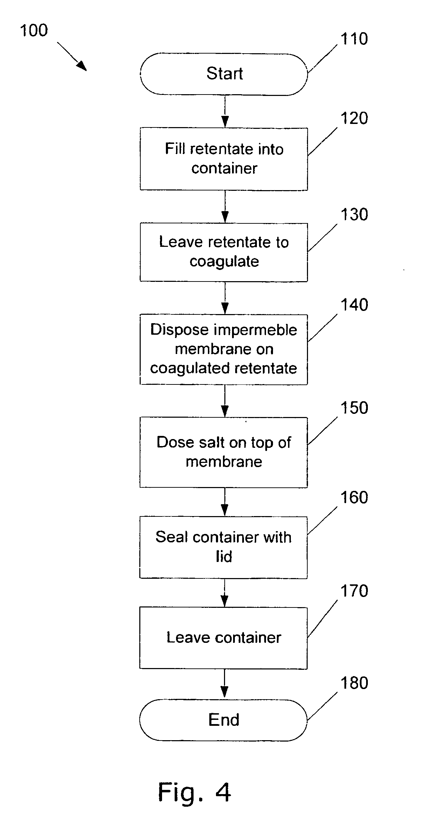

Figure 4 is a flow-chart of a method 100 according to the invention. The method starts in step 110 and continues to step 120, wherein retentate or mix containing rennet and culture are filled into an open ended container, e.g. the container 10 of Figs. 3a and 3b. Subsequently, in step 130, the retentate is left to coagulate. This coagulated retentate is denoted cheese curd. This takes approximately 20 minutes. In the next step, step 140, an impermeable membrane is placed on top of the coagulated retentate or mix or curd.

Subsequently, in step 150, dry salt, preferably NaCl, is dosed on top of the impermeable membrane. Thereafter, in step 160, the open ended container is sealed by a lid. Finally, in step 170, the container 10 is left for some time so as to let the retentate or mix or cheese curd react, viz. acidify, until the pH value of the cheese curd has reached approximately pH 4.6. This process takes approximately 24 hours. After acidification of the cheese curd, syneresis takes place. When the cheese curd has acidified, permeate comprising water with lactose and ashes will be created. Since this permeate has a lower density than the cheese curd, it will move up along the wall sections 13 (see Fig. 3a), past the edge of the membrane 16, and above the membrane to get into contact with the salt 15 (see Fig 3a) and dissolve the dry salt deposited on top of the membrane. The brine created in this way will subsequently drop below the membrane and effect salting of the cheese curd due to osmosis. Throughout the processes of acidification of the cheese curd and the subsequent salting, the container assembly may be left untouched. There is thus no step of turning the container in order to prevent premature mixture of permeate and salt and the resulting cheese with lower quality as explained above. The process 100 ends in step 180.

The open ended container may be a retail container. Preferably, a retail container is sealed by a lid after all ingredients are placed in the open ended container and only opened upon consuming. The term "retail container" is preferably used to designate a container in which a dairy product, preferably cheese, is produced and presented to a consumer. When the open ended container is a retail container, the method 100 may be carried out using the retail container which is sold to the the consumer. Thus, no step for opening the container and moving the cheese to any other container is needed. Thereby, the invention provides a simple method comprising fewer steps than prior art methods. The method of the invention is based on the realization that the membrane should be impermeable in order to prevent liquid passing through the membrane. When an impermeable membrane is used, the cheese curd will acidify to a pH value of 4.6 and upon acidification throughout the cheese curd, permeate is created. This permeate will pass in between the membrane and the wall sections of the container due to the permeate having lower density than the cheese curd. The brine created by mixture of the permeate and the salt will pass downwards (in the downwards direction as seen in Figs. 3a and 3b) due to osmosis and create a substantially uniform salting of the cheese curd.

In short, the present invention relates to a method for producing cheese in a container as well as a container for use in such a method. The method relates to producing acidified cheeses from milk by use of ultra filtration. In the method of the invention, retentate containing rennet and culture are filled into the container and is left to coagulate in the container. After coagulation, a membrane is placed on the coagulated cheese, and salt is dosed on top of the membrane, whereupon the container is sealed. According to the invention, the membrane is impermeable to liquid to ensure that no liquid will pass through the membrane. This is advantageous, in that liquid passing through the membrane will create brine when dissolving the salt on top of the membrane; this brine may pass back into the cheese curd due to osmosis, which will stop the acidification process. This problem is overcome by the method of the invention.

Although the present invention has been described in connection with the specified embodiments, it should not be construed as being in any way limited to the presented examples. The scope of the present invention is set out by the accompanying claim set. In the context of the claims, the terms "comprising" or "comprises" do not exclude other possible elements or steps. Also, the mentioning of references such as "a" or "an" etc. should not be construed as excluding a plurality. The use of reference signs in the claims with respect to elements indicated in the figures shall also not be construed as limiting the scope of the invention. Furthermore, individual features mentioned in different claims, may possibly be advantageously combined, and the mentioning of these features in different claims does not exclude that a combination of features is not possible and advantageous.

## Claims

1. A method of producing cheese in a container, which method comprising the steps of:
- filling a coagulatable liquid substance (14) into an open ended container (10), which container (10) comprises a base section (12) and a wall section (13) connected to or made integral with the base section (12);
- leaving the coagulatable liquid substance (14) to coagulate;
- arranging a membrane (16) on top of the coagulated liquid substance (14);
- dosing a solid substance (15) on top of the membrane;
and
- liquid sealing the open ended container by a lid (17),
**characterized in that** the membrane (16) is an impermeable membrane.

2. A method according to any of the preceding claims, wherein the coagulatable liquid substance comprises ingredients for producing white cheese such as FETA cheese.

3. A method according to any of the preceding claims, wherein the coagulatable liquid substance comprises retentate or recombinated mix containing rennet and cheese culture.

4. A method according to any of the preceding claims, wherein the solid substance is a salt, preferably NaCl.

5. A method according to any of the claims 1 to 4, the impermeable membrane (16) is shaped so as to fit snugly with the inner side of the wall section (13) in a horizontal plane of the open ended container (10).

6. A method according to any of the claims 1 to 4, wherein the extension of the impermeable membrane (16) is smaller than the inner extension of a horizontal cross section of the wall section (13) of the container (10), the extension of the wall section (13) being measured at a distance h from the base section (12).

7. A method according to any of the preceding claims, wherein the impermeable membrane is arranged to at least partly rest on the surface of the coagulated liquid substance (14) inside the container (10).

8. A method according to any of the preceding claims, wherein the impermeable membrane (6) is made of a plastics material.

## Patentansprüche

1. Verfahren zur Herstellung von Käse in einem Behälter, welches Verfahren folgende Schritte umfasst:
- Füllen einer koagulierbaren flüssigen Substanz (14) in einen Behälter (10) mit offenem Ende, wobei der Behälter (10) eine Grundsektion (12) und eine Wandsektion (13), die einstückig mit der Grundsektion (12) verbunden ist, umfasst;
- Stehenlassen der koagulierbaren flüssigen Substanz (14) zum Koagulieren;
- Anbringen einer Membran (16) oben auf der koagulierbaren flüssigen Substanz (14);
- Dosieren einer festen Substanz (15) auf die Membran;
und
- Flüssigkeitsabdichten des offenen Behälters durch einen Deckel (17),
**dadurch gekennzeichnet, dass** die Membran (16) eine undurchlässige Membran ist.

2. Verfahren nach einem der vorhergehenden Ansprüche, worin die koagulierbare flüssige Substanz Bestandteile zur Erzeugung von Weißkäse, wie Fetakäse, umfasst.

3. Verfahren nach einem der vorhergehenden Ansprüche, worin die koagulierbare flüssige Substanz Retentat oder eine rekombinierte Lab und Käsekultur enthaltende Mischung umfasst.

4. Verfahren nach einem der vorhergehenden Ansprüche, worin die feste Substanz ein Salz, vorzugsweise NaCl, ist.

5. Verfahren nach einem der Ansprüche 1 bis 4, wobei die undurchlässige Membran (16) derart geformt ist, dass sie in einer horizontalen Ebene des Behälters (10) mit offenem Ende passgenau an der Innenseite des Wandabschnitts (13) anliegt.

6. Verfahren nach einem der Ansprüche 1 bis 4, worin die Ausdehnung der undurchlässigen Membran (16) kleiner ist als die Innenausdehnung eines horizontalen Querschnitts der Wandsektion (13) des Behälters (10), wobei die Ausdehnung der Wandsektion (13) in einem Abstand h von der Grundsektion (12) gemessen wird.

7. Verfahren nach einem der vorhergehenden Ansprüche, worin die undurchlässige Membran derart angeordnet ist, dass sie mindestens teilweise auf der Oberfläche der koagulierten flüssigen Substanz (14) im Inneren des Behälters (10) ruht.

8. Verfahren nach einem der vorhergehenden Ansprüche, wobei die undurchlässige Membran (16) aus einem Plastikmaterial hergestellt ist.

## Revendications

1. Méthode de production de fromage dans un récipient, ladite méthode comprenant les étapes consistant à :
- remplir avec une substance liquide coagulable (14) un récipient ouvert à une extrémité (10), ledit récipient (10) comprenant une partie base (12) et une partie paroi (13) reliée ou intégrée à la partie base (12) ;
- laisser la substance liquide coagulable (14) coaguler ;
- disposer une membrane (16) au-dessus de la substance liquide coagulée (14) ;
- doser une substance solide (15) au-dessus de la membrane ;
et
- étancher aux liquides le récipient ouvert à une extrémité à l'aide d'un couvercle (17),
**caractérisée en ce que** la membrane (16) est une membrane imperméable.

2. Méthode selon l'une quelconque des revendications précédentes, dans laquelle la substance liquide coagulable comprend des ingrédients pour la production de fromage blanc tel que du fromage FETA.

3. Méthode selon l'une quelconque des revendications précédentes, dans laquelle la substance liquide coagulable comprend un rétentat ou un mélange recombiné contenant de la présure et une culture pour fromage.

4. Méthode selon l'une quelconque des revendications précédentes, dans laquelle la substance solide est un sel, de préférence NaCl.

5. Méthode selon l'une quelconque des revendications 1 à 4, la membrane imperméable (16) étant formée de manière à épouser parfaitement le côté interne de la partie paroi (13) dans un plan horizontal du récipient ouvert à une extrémité (10).

6. Méthode selon l'une quelconque des revendications 1 à 4, dans laquelle l'extension de la membrane imperméable (16) est inférieure à l'extension interne d'une section horizontale de la partie paroi (13) du récipient (10), l'extension de la partie paroi (13) étant mesurée à une distance h de la partie base (12).

7. Méthode selon l'une quelconque des revendications précédentes, dans laquelle la membrane imperméable est disposée de manière à reposer au moins en partie sur la surface de la substance liquide coagulée (14) à l'intérieur du récipient (10).

8. Méthode selon l'une quelconque des revendications précédentes, dans laquelle la membrane imperméable (6) est constituée d'une matière plastique.
